# DEMANDE DE BREVET EUROPEEN

(11) **EP 1 705 276 A1**
(43) Date de publication de la demande: **27.09.2006**
(21) Numéro de dépôt: 06290459.4
(22) Date de dépôt: 22.03.2006
(51) Int. Cl.: D04H 11/00, B60R 13/02, B32B 7/12

(54) **Revêtement notamment de décoration pour une pièce d'habillage avantageusement d'un véhicule automobile et pièce d'habillage revêtue d'un tel revêtement**

(30) Priorité: 23.03.2005 FR 0502876
(71) Demandeur: MÖLLERTECH SAS, 91370 Verrières le Buisson (FR); Société d'Enduction et de Flockage, 53000 Laval (FR)
(72) Inventeur: Richard, Murielle, 36230 Buxieres D'Aillac (FR); Congard, Pierre, 53940 Saint Berthevin (FR)
(74) Mandataire: Berger, Helmut

(57) **Abrégé**

L'invention concerne un revêtement pour pièce d'habillage, avantageusement d'un habitacle de véhicule automobile, comprenant une couche extérieure (2) appliquée à l'aide d'un agent de liaison (3) sur une couche de support (4).

Ce revêtement est caractérisé en ce que la couche extérieure (2) est une couche floquée réalisée à partir des fibres en matière synthétique.

L'invention est utilisable pour la fabrication de revêtements de décoration d'un habitacle de véhicule automobile.

## Description

L'invention concerne un revêtement notamment de décoration pour une pièce d'habillage notamment pour un habitacle de véhicule automobile, du type comprenant une couche extérieure appliquée à l'aide d'un agent de liaison sur une couche support et une pièce d'habillage revêtue d'un tel revêtement.

Les pièces d'habillage de ce type, qui sont connues, comportent, à titre de couche extérieure, un textile obtenu par tissage ou tricotage ou un cuir ou un revêtement synthétique imitant le cuir ou une moquette obtenue par tricotage ou aiguilletage, ce qui ne donne pas un confort visuel et tactile tout à fait satisfaisant.

L'invention a pour but de proposer un revêtement et une pièce d'habillage tels que définis ci-dessus, qui permettent de pallier ces inconvénients.

Pour atteindre ce but, le revêtement selon l'invention est caractérisé en ce que la couche extérieure est une couche floquée, réalisée à partir de fibres en matière synthétique.

Selon une caractéristique de l'invention, la couche support est une couche réalisée en un non-tissé comportant des fibres avantageusement liées par jets d'eau.

Selon une autre caractéristique de l'invention, les fibres de la couche support sont des fibres synthétiques telles que des fibres de polyester, de polypropylène ou de viscose.

Selon encore une autre caractéristique de l'invention, la couche support comporte des fibres d'un seul type tel que des fibres en polyester ou un mélange de plusieurs types de fibres, tel que des fibres polyester et de polypropylène.

Selon encore une autre caractéristique de l'invention, la couche support est un film polyoléfine.

Selon encore une autre caractéristique de l'invention, les fibres de formation de la couche extérieure sont en un matériau synthétique tel que du polyester ou du nylon.

La pièce d'habillage selon l'invention, du type comprenant un revêtement précité et une base porteuse de rigidification en un matériau plastique et/ou composite, est caractérisée en ce que la base porteuse de rigidification en un matériau plastique et/ou composite est appliquée sur la couche support du revêtement selon des techniques in situ d'injection et/ou de compression telles que connues dans le domaine automobile.

L'invention sera mieux comprise, et d'autres buts, caractéristiques, détails et avantages de celles-ci apparaîtront plus clairement au cours de la description explicative qui va suivre faite en référence au dessin schématique unique annexé et donné uniquement à titre d'exemple illustrant un mode de réalisation de l'invention et dans lesquels :
- la figure 1 est une vue en coupe schématique selon la ligne I-I de la figure 2 et montre la structure composite multicouche de la paroi d'une pièce d'habillage réalisée grâce au revêtement selon l'invention, cette pièce étant destinée à être disposée à l'intérieur de l'habitacle d'un véhicule automobile, et
- la figure 2 est une vue en perspective d'une pièce d'habillage réalisée grâce au revêtement selon l'invention ; et
- les figures 3 et 4 sont des vues en coupe schématiques de deux autres modes de réalisation d'une structure multicouche d'une pièce d'habillage selon l'invention.

La pièce d'habillage, référencée de façon générale par le chiffre 1, comporte une couche extérieure 2 réalisée à partir de fibres également appelées flocks en matière plastique, une couche de support 4 formée par un non-tissé ou un film polyoléfine, une couche 3 assurant la liaison entre la couche extérieure 2 et la couche support 4, et une couche de rigidification 5 en matière plastique et/ou composite, surmoulée sur la face libre de la couche de support 4. La rigidification de l'ensemble formé par la couche extérieure 2, l'agent de liaison 3 et la couche de support 4 a été réalisée in situ par injection et/ou de compression, selon des techniques connues utilisées dans le domaine automobile. Concernant le polyoléfine, le film et le polymère injectés doivent être compatibles chimiquement.

Le support pourrait aussi être un textile tricoté dénommé maille. Concernant le textile tricoté, la maille, par exemple une maille rectiligne, est composée de fibre synthétique en polyester ou polyamide ou un mélange des deux.

En ce qui concerne le non tissé, il pourrait être du type de non tissé fabriqué selon les procédés par voie fondue appelé "melt blown".

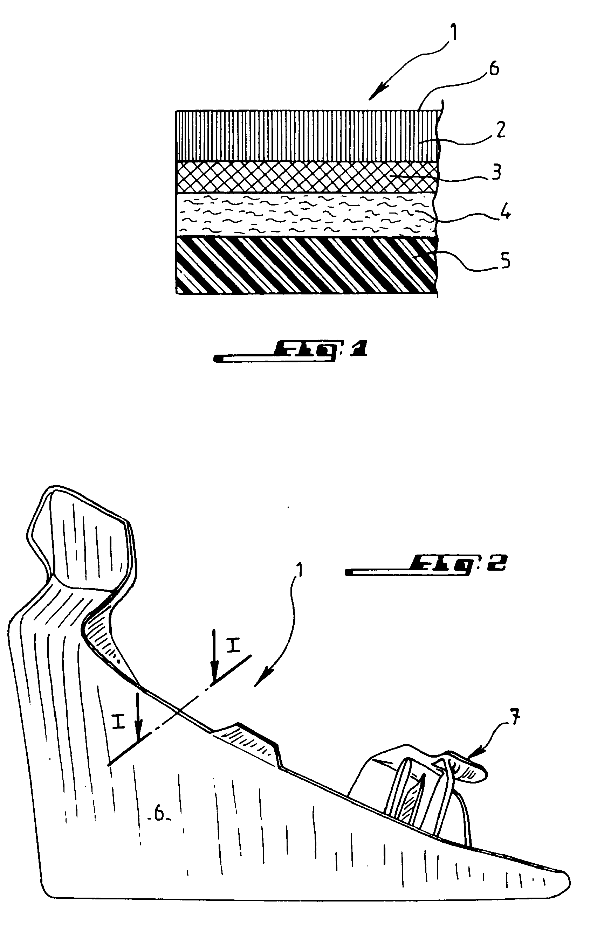

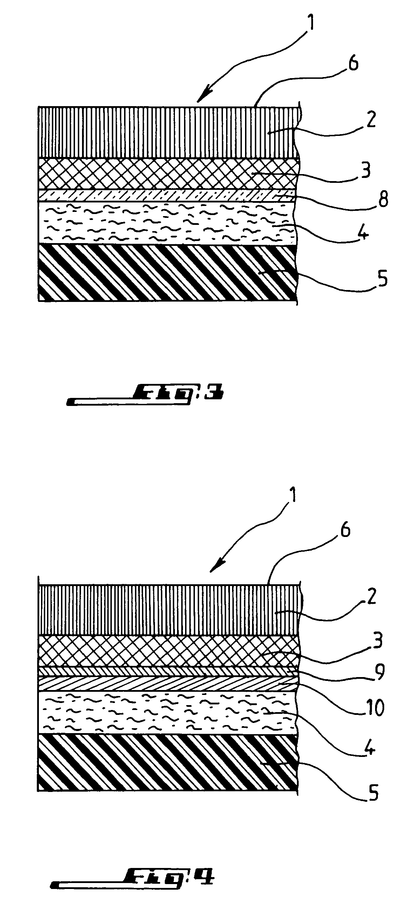

L'ensemble formé par la couche extérieure 2 , l'agent de liaison 3 et sa couche support 4 est réalisé sous forme d'une bande très souple et donc d'une faible épaisseur appropriée de façon que ce ruban puisse s'appliquer intimement à des faces de moule d'injection et/ou compression surmoulage même très compliqué, ce qui permet la fabrication de pièces d'habillage complexes telles que la pièce représentée sur la figure 2 et qui est destinée à être disposée entre la vitre arrière et la porte de coffre d'un véhicule automobile, la face désignée par la référence 6 étant visible tandis que la partie de forme complexe 7 est cachée après montage sur la carrosserie.

Selon un autre exemple de fabrication d'une pièce d'habillage grâce au revêtement réalisé selon l'invention, le ruban est appliqué selon des méthodes connues de garnissage par encollage sur une pièce fabriquée au préalable (dénommé insert) dans un matériau quelconque en plastique ou non.

Selon encore un autre exemple de fabrication d'une pièce plastique grâce au revêtement réalisé selon l'invention et pour lequel la couche support est un film polyoléfine, le ruban après avoir été thermoformé est appliqué selon les techniques habituelles connues dans le domaine automobile.

La couche support 4 est par conséquent formée par un matériau non tissé élastique. La couche est imperméable à la matière injectée. Il est avantageux de réaliser un non-tissé à partir de fibres synthétiques liées par jets d'eau pour obtenir un produit désigné communément par des termes anglais "spunlace" ou "hydroentrangled non-woven". Ce type de non-tissé permet, par rapport à un non-tissé aiguilleté mécaniquement, également envisageable, d'obtenir un aspect de surface régulier et homogène.

Il est avantageux dans le cadre de l'invention d'utiliser un non-tissé composé de fibres synthétiques notamment de polyester, polypropylène ou viscose. Le non-tissé pourrait être composé d'un seul type de fibres par exemple des fibres 100% polyester ou d'un mélange de plusieurs types de fibres par exemple en polyester dans des proportions comprises entre 0 et 50% et en polypropylène dans les mêmes proportions.

La couche extérieure est réalisée avantageusement à partir de fibres ou flocks en polyester ou en nylon, préférablement en nylon avec un titre compris entre 0,5 et 3,3 dtex et plus préférablement avec un titre compris entre 0,9 et 1,7 dtex pour une longueur de fibres comprise entre 0,3 mm et 1 et préférablement comprise entre 0,4 et 0,8 mm, le terme "titre" étant l'unité de masse par unité de longueur. Les fibres pourraient être ou non du même coloris sans que cela influence les propriétés de mise en oeuvre et les propriétés finales.

Le système de liaison entre la couche extérieure et la couche support est développé d'une part, de sorte à satisfaire le compromis antithétique/antinomique élasticité (nécessaire aux besoins des procédés de fabrication connus et utilisés dans le domaine automobile) /permanence d'aspect (résistance à l'abrasion, tenue aux frottements) requis les cahiers des charges automobiles. D'autre part il est développé de sorte à ne pas créer de phénomènes de migration lors de la transformation et/ou de l'application sur pièce selon les mêmes procédés de fabrication cités ci dessus. Enfin, il est développé de façon à ne pas générer de défauts, par exemple fogging, émission de Composés Organiques Volatiles (COV), allant à l'encontre des spécifications décrites dans les mêmes cahiers des charges automobiles pour habillages intérieurs. A titre d'exemples, le système de liaison peut être composé d'un adhésif seul ou d'un adhésif enrichi d'un apprêt, si le support le nécessite. En effet, cet apprêt est déposé, de façon connue en soi, en premier sur un support trop poreux ou présentant un effet trop «buvard», ce qui permet de conserver ses propriétés d'élasticité et par suite celles du revêtement floqué. L'adhésif , quant à lui peut, par exemple, être formulé à partir d'un polyuréthane 100 %solide de façon connue en soi, additionné, pour les besoins de l'invention, d'un catalyseur assurant le bon accrochage des fibres et donc une bonne résistance à l'abrasion et au frottement. Ce catalyseur sera additionné dans des proportions comprises entre 0.1 et 10 phR (per Hundred Rubber ; parties pour 100 parts) et préférentiellement entre 2 et 5 parts.

Pour la fabrication d'une pièce d'habillage grâce au revêtement réalisé selon l'invention, par exemple la pièce représentée sur la figure 2, on applique sur le support non-tissé ou polyoléfine 4 une couche d'un agent de liaison 3 et projette sur la face encollée les fibres telles que décrites plus haut. Puis l'ensemble est amené à passer par un four, de façon connue en soi. L'ensemble ainsi obtenu, par exemple en forme d'un ruban ou d'une feuille est placé dans un moule d'injection ou de compression surmoulage, avec la couche extérieure 2 appliquée contre la face interne (dénommée empreinte ou matrice) du moule. Après avoir ainsi tapissé la face interne du moule par le ruban ou la feuille, de forme appropriée, on procède à l'injection de la matière thermoplastique et/ou thermodurcissable et/ou composite de rigidification devant constituer la couche 5.

L'invention permet de réaliser ainsi des pièces d'habillage de n'importe quelle forme complexe, telle que des garnitures de pavillon et/ou d'ébénisterie, assurant un confort visuel susceptible d'évoquer chez les occupants du véhicule une sensation de bien-être et donnant des sensations agréables au toucher et, le cas échéant, de profondeur. Le revêtement (floqué) de décoration présente une excellente tenue au rayonnement UV, c'est-à-dire une solidité de la teinte à la lumière et à la chaleur, une bonne tenue aux différents tests de permanence d'aspect, par exemple au frottement et aux agents de nettoyage, une bonne résistance à l'abrasion et/ou au grattage et aux dégorgements. L'invention permet de satisfaire aux exigences sévères de restriction de concentration en composants organiques volatils (COV) et de dépôt de produits volatils sur vitre ou d'embuage. La pièce réalisée à l'aide du revêtement décrit selon l'invention satisfait les mêmes critères cités ci-dessus et définis dans les cahiers des charges automobiles pour pièces intérieures.

La nature des fibres utilisée et énoncée plus haut permet aussi d'envisager des traitements de la surface floquée avant sa mise en oeuvre, telle qu'un traitement de surface chimique offrant une meilleure résistance aux tâches et salissures, un traitement de surface mécanique tel qu'un grainage pour changer son aspect visuel et son toucher à partir des mêmes matériaux floqués et renforcer de manière incidente sa résistance au marquage accidentel par exemple rayures, chocs etc.

La figure 3 présente un autre mode de réalisation d'un revêtement selon l'invention qui se distingue de celui de la figure 1 par l'ajout entre la couche d'agent de liaison 2 et la couche de support 4 tissé ou polyoléfine ou maille 3 une couche d'un apprêt moussé noté 8. Cet apprêt moussé à l'aide d'un agent gonflant ajouté dans des proportions allant de 0,5 à 40 et, de préférence, de 10 à 25, permet au support 4 de ne pas absorbé l'adhésif 3 et donner une élasticité au revêtement complet, élasticité qui est nécessaire pour les procédés de transformation in situ selon le principe connu sous les termes "one shot" (c'est-à-dire une étape). L'adhésif peut ainsi glisser sur le support et s'adapter à la forme de la pièce. L'apprêt s'adapte à tous les adhésifs polyuréthane.

La figure 4 montre encore un autre mode de réalisation d'une pièce d'habillage 1, qui comporte entre la couche d'agent de liaison 3 et le support 4 tissé ou polyoléfine ou maille 4 une couche d'enduction moussée 9 et un apprêt standard 10. L'apprêt non moussé 10 permet au support de ne pas absorber l'adhésif. L'enduction moussée 9 permet de donner une élasticité nécessaire pour les procédés de transformation in situ dans le cas où le revêtement nécessite d'être thermoformé. L'adhésif peut ainsi glisser sur le support et s'adapter à la forme de la pièce. L'apprêt et l'enduction moussés s'adaptent à tous les adhésifs polyuréthane. L'adhésif pourrait être un adhésif sans solvant.

Dans le cas où le support est un film polyoléfine, il est contre-collé par flammage sur un support thermoformable qui peut être par exemple une mousse de polyoléfine telle que du polypropylène ou polyéthylène de façon qu'on obtienne la construction représentée à la figure 3, c'est-à-dire comprenant une couche floquée extérieure 2, un adhésif de floquage 3, un apprêt moussé 8, un support polyoléfine 4 non tissé ou tricot maille, et, supplémentairement une couche de mousse par exemple polypropylène PP ou polyéthylène PE entre le support 4 et le plastique injecté 5. Le support 4 pourrait aussi être un film plastique thermoformable de type PS, ABS, PC, PP par exemple. Dans ce cas où le film constitue une barrière pour l'adhésif il n'y a pas besoin de mousse et donc de contre-collage. La structure pourrait correspondre à celle représentée à la figure 4, avec cependant suppression de la couche d'apprêt.

## Revendications

1. Revêtement notamment de décoration pour pièce d'habillage, avantageusement d'un habitacle de véhicule automobile, comprenant un ensemble formé par une couche extérieure appliquée à l'aide d'un agent de liaison sur une couche support, **caractérisé en ce que** la couche extérieure (2) est une couche floquée réalisée à partir des fibres en matière synthétique.

2. Revêtement selon la revendication 1, **caractérisé en ce que** la couche support (4) est une couche réalisée en un non-tissé comportant des fibres avantageusement liées par jets d'eau.

3. Revêtement selon la revendication 2, **caractérisé en ce que** les fibres de la couche support (4) sont des fibres synthétiques telles que des fibres de polyester, de polypropylène ou de viscose.

4. Revêtement selon l'une des revendications 2 ou 3, **caractérisé en ce que** la couche support (4) comporte des fibres d'un seul type tel que des fibres en polyester ou un mélange de plusieurs types de fibres, telles que des fibres de polyester ou de polypropylène.

5. Revêtement selon la revendication 1, **caractérisé en ce que** la couche support (4) est un film en matière polyoléfine.

6. Revêtement selon l'une des revendications 1 à 5, **caractérisé en ce que** les fibres de formation de la couche extérieure (2) sont en un matériau synthétique tel que du polyester ou du nylon.

7. Revêtement selon la revendication 6, **caractérisé en ce que** les fibres de la couche extérieure sont choisies de façon à obtenir une surface extérieure (6) veloutée et donnant une sensation de profondeur.

8. Revêtement selon la revendication 1 **caractérisé en ce que** la formulation de l'adhésif comprenne un catalyseur assurant un bon accrochage des fibres.

9. Revêtement selon les revendication 8 **caractérisé en ce que** le catalyseur soit présent dans des proportions comprises entre 0.1 et 10 phR et préférentiellement entre 2 et 5 phR.

10. Revêtement selon les revendications 8 et 9
**caractérisé en ce que** l'agent de liaison soit développé de telle sorte à ne, d'une part, ni pénaliser les caractéristiques d'élasticité du revêtement fini, d'autre part, ni générer de phénomènes de migration au cours du processus de fabrication de la pièce d'habillage, processus conforme aux techniques in situ de transformation connues et utilisées dans l'automobile.

11. Revêtement selon l'une des revendications 1 à 10, **caractérisé en ce que** les fibres de la couche extérieure (2) et l'agent de liaison (3) sont choisis de façon que les fibres puissent être résistantes à la lumière, notamment au rayonnement UV, à la chaleur et aux agressions chimiques et mécaniques ; et que l'agent de liaison puisse être résistant à la lumière, à la chaleur et aux agressions chimiques.

12. Revêtement selon l'une des revendications 1 à 10, **caractérisé en ce qu'**une couche d'apprêt moussé (8) est interposée entre l'agent de liaison (3) et la couche support (4) pour éviter que le support absorbe l'agent de liaison et donne une élasticité au revêtement.

13. Revêtement selon l'une des revendications 1 à 10, **caractérisé en ce qu'**il comprend une couche d'induction moussée (9) et une couche d'apprêt (10) entre l'agent de liaison (3) et la couche de support (4), l'apprêt évitant l'absorption de l'agent de liaison par le support et l'induction donnant une élasticité.

14. Pièce d'habillage, notamment pour un habitacle de véhicule automobile, du type comprenant un revêtement selon l'une des revendications 1 à 13 et une base porteuse de rigidification en un matériau plastique et/ou composite, **caractérisée en ce que** la base porteuse de rigidification en un matériau plastique et/ou composite est appliquée sur la couche support du revêtement selon des techniques in situ d'injection et/ou de compression telles que connues dans le domaine automobile.

15. Pièce d'habillage, notamment pour un habitacle de véhicule automobile, du type comprenant un revêtement selon l'une des revendications 1 à 14 et un insert porteur de rigidification, **caractérisée en ce que** l'insert porteur de rigidification est fabriqué au préalable en un matériau plastique ou non et **en ce que** le revêtement selon les revendications 1 à 11 est appliqué sur l'insert préalablement fabriqué selon des méthodes de garnissage par encollage telles que connues dans le domaine automobile.

16. Revêtement selon la revendication 5, **caractérisé en ce qu'**il puisse être thermoformé ou non avant d'être appliqué selon quelconque procédé de fabrication d'injection et/ou de compression et/ou de garnissage tel que connu dans l'automobile sur la base ou l'insert porteur de rigidication.
